# FASCICULE DE BREVET EUROPEEN

(11) **EP 4 066 111 B1**
(45) Date de publication et mention de la délivrance du brevet: **24.09.2025**
(21) Numéro de dépôt: 20824311.3
(22) Date de dépôt: 26.11.2020
(51) Int. Cl.: G06F 9/50, G06F 11/30, G06F 9/455, H04W 52/02

(54) **PROCÉDÉ DE DIMENSIONNEMENT D'UNE PUISSANCE ÉLECTRIQUE RESERVÉE PAR DES STATIONS DE BASE**
VERFAHREN ZUR DIMENSIONIERUNG DER VON BASISSTATIONEN RESERVIERTEN ELEKTRISCHEN LEISTUNG
METHOD FOR DIMENSIONING AN ELECTRIC POWER RESERVED BY BASE STATIONS

(30) Priorité: 29.11.2019 FR 1913554
(43) Date de publication de la demande: 05.10.2022
(73) Titulaire: Orange, 92130 Issy-les-Moulineaux (FR)
(72) Inventeur: LEMOINE, Benoît, 92326 CHÂTILLON CEDEX (FR); NICULESCU, Anca, 020334 Bucharest (RO); BOUSSARDON, Jean-François, 92326 CHÂTILLON CEDEX (FR); PENHOAT, Joël, 92326 CHÂTILLON CEDEX (FR)
(74) Mandataire: Plasseraud IP
(86) Numéro de dépôt international: PCT/FR2020/052190
(87) Numéro de publication internationale: WO 2021/105624

(56) Documents cités:
- WO-A1-2015/126430
- WO-A1-2016/192011
- KR-A- 20120 133 572
- US-A1- 2018 165 167
- US-A1- 2018 349 195
- US-A1- 2019 334 777

## Description

### Arrière-plan de l'invention

La présente description se rapporte au domaine des réseaux de télécommunications et, plus précisément, à des procédés et à des dispositifs de dimensionnement de puissance électrique réservée pour des stations de base connectées à une infrastructure réseau.

Les réseaux de télécommunications actuels mettent en œuvre des sites radio qui comprennent différents types d'équipements et offrent des services de communication fixe, sans fil et mobile. Ces équipements comportent notamment des antennes, des ordinateurs et des serveurs connectés en réseau. En particulier, ces équipements sont alimentés électriquement et configurés pour répondre aux besoins de qualité de service des opérateurs de télécommunications.

Toutefois, l'augmentation constante des débits de données requis par les utilisateurs des réseaux de télécommunications fait que la consommation de puissance électrique par les stations de base de ces réseaux est toujours plus importante. De plus, cette consommation peut varier au cours du temps en raison d'évènements, prévus ou non, ainsi qu'en fonction de la localisation géographique des terminaux mobiles des utilisateurs qui se connectent à ces stations de base.

Actuellement, il est difficile de configurer des stations de base et des équipements de telles stations de base en vue de répondre à des besoins pouvant varier subitement et fortement.

Par exemple, un site radio isolé géographiquement peut être subitement sollicité lors de l'organisation d'un évènement social ponctuel organisé à proximité, par exemple un festival de musique organisé en périphérie de la couverture géographique d'un opérateur de télécommunications, et au cours duquel un grand nombre d'utilisateurs souhaite établir des communications, ce qui sollicite le site radio au-delà de sa capacité habituelle et normalement prévue.

Pour tenir compte d'une variation subite et éventuellement importante de la charge de stations de base, il est connu des techniques de dimensionnement de la puissance électrique fournie à des stations de base.

Un exemple de technique de dimensionnement connu prévoit d'évaluer la consommation électrique moyenne d'un site radio, d'ajouter à cette évaluation la quantité de charge qui peut être fournie au moyen de batteries d'alimentation éventuelles pour alimenter ce site radio, et éventuellement d'inclure une marge supplémentaire qui dépend de paliers de puissance.

Ce type de technique de dimensionnement permet d'évaluer approximativement la puissance électrique réservée à une station de base. On rappelle ici qu'une puissance électrique réservée par un ensemble de stations de base est définie comme étant la capacité de puissance correspondante pouvant être rendue disponible par le gestionnaire de ces stations de base afin de satisfaire à une demande donnée dans un intervalle de temps limité.

Ainsi, la plupart des systèmes électriques que comprennent ces stations de base sont conçus pour que, dans des conditions normales d'exploitation, la réserve de puissance soit toujours au moins égale à la capacité du plus grand générateur.

Le dimensionnement de la puissance électrique réservée permet donc de limiter la consommation électrique d'un système en lui imposant un seuil de puissance inférieur ou égal à une valeur donnée. Ceci permet aussi de s'assurer que l'entièreté de la puissance électrique qui est allouée à la station de base n'est pas utilisée, pour éventuellement être partagée ou redirigée ailleurs.

Cependant, les techniques connues présentent de nombreux inconvénients, en particulier lors de sollicitations importantes ou imprévues. Pour y pallier, la puissance électrique réservée est généralement surdimensionnée afin d'assurer une marge suffisante.

Par exemple, une centrale d'alimentation électrique peut être conçue pour fournir une puissance électrique à deux sites radio. En conséquence, la puissance que doit être capable de délivrer la centrale doit être supérieure ou égale à la somme des puissances maximales consommées par ces deux sites radio. En particulier, le dimensionnement de la centrale sera prévu de sorte que la puissance électrique réservée soit égale à la somme des puissances maximales consommées de chacun des deux sites radio.

Toutefois, un tel surdimensionnement implique que la répartition de la puissance électrique entre une ou plusieurs stations de base n'est répartie ni de manière optimale ni de manière flexible entre chacune des stations de base. C'est le cas, en particulier, en cas d'augmentation ou de diminution soudaine de la puissance électrique consommée par l'une ou plusieurs des stations de base en même temps, par exemple en raison d'une augmentation ou d'une diminution correspondante de trafic réseau géré par une pluralité de stations de base.

En outre, les techniques de dimensionnement connues ne permettent pas de répartir au mieux la puissance électrique réservée, et ne sont pas applicables en pratique pour des stations de base comportant un grand nombre d'équipements.

De plus, un surdimensionnement impose des contraintes supplémentaires en termes de ressources utilisées par ces stations de base, ou lorsque l'infrastructure associée est de faible capacité. Par exemple, la taille des batteries d'alimentation de stations de base doit dans ce cas également être surdimensionnée, ce qui implique un encombrement plus important. De même, les câbles électriques utilisés pour relier une centrale électrique à des stations de base doivent aussi être surdimensionnés pour permettre d'écouler la puissance associée, et donc éviter un échauffement problématique en raison de l'effet Joule.

Ceci pose aussi différents problèmes de gaspillage de matériaux et d'énergie, et de répartition des ressources en général.

Comme il n'est pas nécessaire de fournir constamment une puissance électrique surdimensionnée à des stations de base, il existe un besoin de disposer de méthodes et de dispositifs permettant plus de flexibilité relativement à la manière d'alimenter des stations de base, et notamment pour gérer la répartition d'une puissance électrique entre plusieurs sites radio.

Il existe aussi un besoin de disposer de méthodes et de dispositifs permettant d'optimiser la qualité de service fournie par les opérateurs de ces stations de base, notamment pour réduire la quantité de ressources utilisées par celles-ci, pour limiter la quantité d'énergie consommée, pour éviter le gaspillage de ressources.

US 2018/349195 A1 divulgue un procédé et un système d'optimisation d'une mise à l'échelle (« scaling ») d'une application comprenant un ensemble de machines virtuelles. Pour cela, D1 anticipe l'adaptation de valeurs de seuils haut et bas associés à des indicateurs de performance internes (« system key performance indicators »), la détection d'un dépassement de ces seuils déclenchant une action de mise à l'échelle (« scale-in » ou « scale-out »). Des valeurs d'indicateurs de performance externes (« external key performance indicators ») permettent alors d'évaluer l'effet d'une telle action de mise à l'échelle. La mise à l'échelle au sens de D1 peut alors inclure l'adaptation d'un nombre de machines virtuelles ou d'une quantité de ressources allouée à une machine virtuelle.

WO 2015/126430 A1 concerne un procédé de gestion de fonctions irtuelles d'une infrastructure réseau d'une architecture NFV telle que définie par l'ETSI.

US 2018/165167 A1 concerne un procédé de gestion de politique de virtualisation d'un réseau.

La présente divulgation a pour objet d'apporter des améliorations par rapport à l'état de la technique.

### Objet et résumé de l'invention

L'invention est exposée dans le jeu de revendications joint.

Les méthodes et les dispositifs d'alimentation en énergie de stations de base, et notamment de stations de base utilisées dans le domaine des réseaux de télécommunications, nécessitent donc de nouvelles techniques de dimensionnement pour atteindre de meilleurs niveaux de performance.

Afin d'améliorer la situation et de répondre aux inconvénients décrits précédemment, il est proposé selon un premier objet des présentes, un procédé selon la revendication 1.

Dans les présentes, un gestionnaire de virtualisation est, de manière générale, un dispositif configuré pour pouvoir garantir l'alimentation électrique de stations de base en cas d'arrêt ou de rupture dans la fourniture de puissance électrique à ces stations de base, ou en cas de surcharge causée par un pic de la demande.

Typiquement, la puissance électrique réservée peut être dimensionnée pour fournir une alimentation suffisante en énergie aux équipements de ces stations de base, et notamment de leurs serveurs informatiques.

Dans les présentes, une station de base est tout équipement installé sur un site radio et muni d'une antenne émettrice-réceptrice avec lequel peuvent communiquer des terminaux mobiles, par exemple pour avoir accès à un réseau de télécommunications. De manière générale, une station de base permet à l'ensemble des terminaux présents dans la zone géographique couverte par la station de base de se connecter au réseau.

Dans les présentes, une ressource informatique est une ressource pouvant être consommée ou fournie par un dispositif informatique. Par exemple, un serveur informatique est un équipement matériel apte à fournir des ressources informatiques à une station de base à laquelle il est connecté.

Dans les présentes, on distingue les ressources informatiques physiques et les ressources informatiques virtuelles. De manière non limitative, une ressource informatique physique est une ressource de calcul, de stockage, de réseau ou d'énergie fournie par un serveur physique. Une ressource informatique virtuelle est toute ressource informatique pouvant être déplacée et/ou partagée entre plusieurs dispositifs informatiques, et sont telles que ces dispositifs ne disposent pas d'information directe ni sur l'origine ni sur la destination de cette ressource. Une ressource informatique virtuelle peut être aussi de calcul, de stockage, de réseau ou d'énergie, et peuvent ainsi inclure, de manière générale, des fichiers, des connexions à l'infrastructure réseau, des zones de mémoire, etc.

Dans les présentes, l'expression "réseau" désigne différents types de réseaux, notamment des réseaux de télécommunication et des réseaux de communication de données, qu'ils fournissent des services fixes ou mobiles. L'expression "réseau " désigne aussi tout service de réseau fonctionnant sur une infrastructure en réseau dans laquelle des fonctions virtuelles sont déployées. En d'autres termes, les réalisations décrites dans les présentes peuvent être appliquées dans le cas également d'infrastructures en réseau utilisant un ou plusieurs éléments matériels dédiés sous la forme de fonctions physiques de type PNF (ou « Physical Network Function », en anglais).

De manière non limitative, le procédé s'applique au dimensionnement d'une puissance électrique réservée par plusieurs stations de base courantes parmi la pluralité de stations de base connectées au gestionnaire de virtualisation de l'infrastructure réseau. Ainsi, il est possible de paramétrer simultanément plusieurs serveurs informatiques de plusieurs stations de base en même temps.

Ainsi, le procédé du premier objet permet d'ajuster le dimensionnement de la puissance électrique réservée par des stations de base en fonction de plusieurs critères, parmi lesquels la puissance électrique maximale pouvant être délivrée par un dispositif d'alimentation électrique alimentant l'ensemble des stations de base et la puissance électrique utilisées par chacune des stations de base.

Ainsi, la puissance électrique réservée peut être répartie entre au moins une station de base courante et l'une ou plusieurs des autres stations de base que comprend la pluralité.

Dans une réalisation particulière, le paramétrage dudit au moins un serveur informatique comprend une extinction du serveur informatique, et le contrôle de ladite au moins une ressource informatique virtuelle comprend une libération, par un module de contrôle que comprend le gestionnaire de virtualisation, de l'au moins une ressource informatique virtuelle.

Dans les présentes, le serveur informatique à éteindre est initialement activé et en phase de fonctionnement, ou en phase de veille.

Ainsi, il est possible de diminuer la puissance électrique réservée et le dimensionnement de celle-ci. Ceci permet de récupérer de la puissance électrique sur un sous-ensemble de stations de base en éteignant ou en mettant en veille un ou plusieurs serveurs dans ce sous-ensemble de stations de base, par exemple des stations radio.

Ceci permet de répartir la puissance électrique entre plusieurs stations de base en diminuant la puissance électrique réservée par au moins une station de base courante.

Dans une réalisation particulière, la requête de dimensionnement comprend une demande de diminution de la puissance électrique réservée, ladite demande de diminution étant émise par un dispositif de contrôle de puissance électrique à destination d'un module de contrôle environnemental que comprend le gestionnaire de virtualisation, ledit dispositif de contrôle de puissance électrique étant connecté à l'au moins une station de base courante.

Ainsi, il est possible d'automatiser la mise en œuvre d'un dimensionnement d'une puissance réservée par une pluralité de stations de base en fonction d'une connaissance des puissances électriques réservées et/ou consommées par l'une ou l'autre de ces stations de base.

Dans une variante de réalisation possible, la requête de dimensionnement comprend une demande de diminution de la puissance électrique consommée par l'au moins une station de base courante.

Dans une autre variante de réalisation possible, la requête de dimensionnement comprend une notification indiquant qu'une puissance consommée par une station de base de la pluralité est inférieure à la puissance électrique réservée par ladite au moins une station de base courante.

Dans une réalisation particulière, la libération de l'au moins une ressource informatique virtuelle comprend, sur extinction du serveur informatique, une suppression d'au moins une fonction virtuelle dans l'infrastructure réseau, ladite suppression étant mise en œuvre par un module de gestion de fonctions virtuelles que comprend le gestionnaire de virtualisation.

Ainsi, la suppression d'une telle fonction virtuelle permet de dimensionner la puissance électrique réservée par la pluralité de stations de base en la diminuant.

Dans les présentes, la virtualisations de fonctions sous la forme de fonctions virtuelles (VNF, ou « Virtual Network Function », en anglais) consiste à découpler les fonctions réseau des équipements physiques dédiés pour déployer les fonctions réseau dans des espaces de stockage plus ou moins distribués et/ou en s'appuyant sur des serveurs génériques.

Dans les présentes, une fonction virtuelle comprend un ensemble de composants logiciels exécutables sur un serveur tel qu'une machine virtuelle (VM, ou « Virtual Machine », en anglais), ou un conteneur (en anglais Container) au sein de l'architecture réseau, qui est alors dite virtualisée.

Dans les présentes, le terme machine virtuelle comprend également le terme conteneur. Le déploiement d'un service réseau établi à partir de fonctions virtuelles consiste donc à placer les différents composants des fonctions virtuelles dans des machines virtuelles ayant les ressources nécessaires pour l'exécution des fonctions virtuelles et consécutivement, pour la bonne mise en œuvre du service. Ces ressources, qu'elles soient des ressources de calcul, de stockage, de réseau ou d'énergie, sont fournies par l'infrastructure réseau hébergeant ces machines virtuelles/conteneurs.

Ces fonctions virtuelles permettent de proposer une qualité de service améliorée et de répondre aux exigences de fonctions réseau, telles que les fonctions relatives aux réseaux de télécommunications (RAN, ou « Radio Access Network », en anglais). Ainsi, il est possible de modifier le dimensionnement de la puissance électrique réservée par une station de base sans affecter la qualité de service.

En outre, l'utilisation de fonctions virtuelles plutôt que de fonctions physiques est avantageux en ce qu'il est possible de déplacer ces fonctions virtuelles au sein de l'infrastructure réseau.

Dans une réalisation particulière, le paramétrage dudit au moins un serveur informatique comprend une activation du serveur informatique, et le contrôle de ladite au moins une ressource informatique virtuelle comprend une allocation, par un module de contrôle que comprend le gestionnaire de virtualisation, de l'au moins une ressource informatique virtuelle sur le serveur informatique activé.

Dans les présentes, le serveur informatique à activer est initialement éteint.

Dans les présentes, l'activation d'un serveur informatique peut correspondre à placer ce serveur dans une phase choisie parmi une phase en veille, une phase allumée de démarrage ou encore une phase allumée en régime permanent.

Ainsi, il est possible d'augmenter la puissance électrique réservée, et donc le dimensionnement de celle-ci. Ceci permet de répartir la puissance électrique d'un sous-ensemble de stations de base en activant un ou plusieurs serveurs dans ce sous-ensemble de stations de base.

Dans une réalisation particulière, la requête de dimensionnement comprend une notification d'un dépassement de la puissance électrique réservée, ladite notification de dépassement étant émise par un module hyperviseur que comprend le gestionnaire de virtualisation, ou une notification d'une augmentation de trafic émise par un module de gestion de fonctions virtuelles que comprend le gestionnaire de virtualisation.

Dans une variante de réalisation possible, la requête de dimensionnement comprend une notification d'augmentation de trafic géré par l'une des stations de base ou une demande d'instanciation d'une fonction virtuelle.

Dans les présentes, ledit trafic peut augmenter sur une fonction virtuelle présente sur un serveur informatique.

Dans une réalisation particulière, l'allocation de l'au moins une ressource informatique virtuelle comprend, sur activation du serveur informatique, une instanciation d'au moins une fonction virtuelle dans l'infrastructure réseau, ladite instanciation étant mise en œuvre par un module de gestion de fonctions virtuelles que comprend le gestionnaire de virtualisation.

Ainsi, l'instanciation de l'au moins une fonction virtuelle permet de dimensionner la puissance électrique réservée par la pluralité de stations de base, puisque cette instance de fonction virtuelle consomme typiquement de l'énergie électrique.

Dans une réalisation particulière, l'au moins une ressource informatique virtuelle est une ressource informatique virtuelle de puissance électrique comprenant une composante choisie parmi une composante de calcul, une composante de stockage, une composante de mémoire et une composante de réseau.

Dans les présentes, et par exemple, une ressource de calcul peut être une ressource de type CPU, de type GPU (« Graphics Processing Unit », en anglais), de type RAM (« Random Access Memory », en anglais), de type ROM (« Read-Only Memory », en anglais) ou encore, de manière non limitative de type DISK, le type DISK comprenant le type HDD (« Hard Disk Drive », en anglais) et le type SDD (« Solid State Drive », en anglais).

Ceci permet d'optimiser le dimensionnement de la puissance électrique réservée en fonction du type de ressource allouée, puisque la puissance électrique utilisée par chaque type de ressource est différente et peut évoluer au cours du temps.

Selon un deuxième objet des présentes, il est aussi proposé un programme informatique comportant des instructions pour la mise en œuvre du procédé selon l'une des réalisations du premier objet, lorsque lesdites instructions sont exécutées par un processeur d'un circuit de traitement informatique.

Selon un troisième objet des présentes, il est aussi proposé un support de stockage d'informations, amovible ou non, partiellement ou totalement lisible par un ordinateur ou un processeur comportant des instructions de code d'un programme d'ordinateur pour l'exécution de chacune des étapes du procédé selon l'une quelconque des réalisations du premier objet.

Selon un quatrième objet des présentes, il est aussi proposé un gestionnaire de virtualisation d'une infrastructure selon la revendication 11.

Selon un cinquième objet des présentes, il est aussi proposé un système comprenant un gestionnaire de virtualisation selon le quatrième objet et une pluralité de stations de base configurées pour être connectées audit gestionnaire de virtualisation.

### Brève description des dessins

D'autres caractéristiques, détails et avantages apparaîtront à la lecture de la description détaillée ci-après, et à l'analyse des dessins annexés, sur lesquels :
[Fig. 1], la figure 1 représente sous forme d'organigramme, des étapes d'un procédé de dimensionnement d'une puissance électrique réservée selon un exemple général de réalisation ;
[Fig. 2], la figure 2, représente une vue schématique d'une infrastructure réseau connectée à une pluralité de stations de base selon un exemple de réalisation ;
[Fig. 3], la figure 3, représente une vue schématique d'une connexion entre une infrastructure réseau et un domaine d'environnement technique selon un exemple de réalisation ;
[Fig. 4], la figure 4, représente sous forme de diagramme de flux des étapes d'un procédé de dimensionnement d'une puissance électrique réservée selon un premier mode de réalisation ;
[Fig. 5], la figure 5, représente sous forme de diagramme de flux des étapes d'un procédé de dimensionnement d'une puissance électrique réservée selon un deuxième mode de réalisation ;
[Fig. 6], la figure 6, représente sous forme de diagramme de flux des étapes d'un procédé de dimensionnement d'une puissance électrique réservée selon un troisième mode de réalisation ;
[Fig. 7], la figure 7, représente sous forme de diagramme de flux des étapes d'un procédé de dimensionnement d'une puissance électrique réservée selon un quatrième mode de réalisation de réalisation ; et
[Fig. 8], la figure 8, représente un bloc-diagramme schématique d'un circuit de traitement selon un exemple de réalisation.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

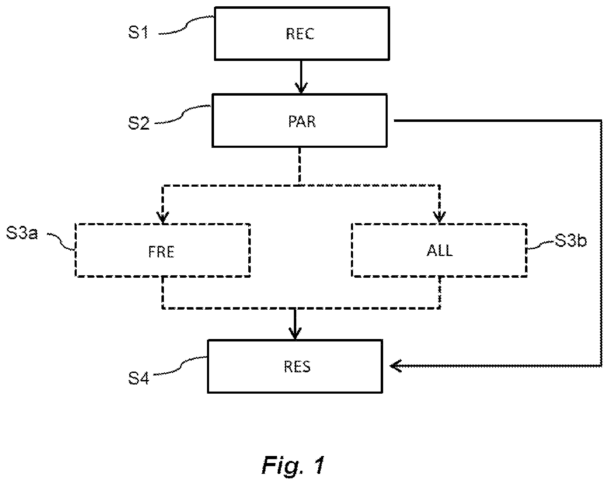

La figure 1 représente sous forme d'organigramme, des étapes S1, S2, S3a, S3b et S4 d'un procédé de dimensionnement d'une puissance électrique réservée par une pluralité de stations de base selon un exemple de réalisation. Ces étapes sont mises en œuvre par un gestionnaire de virtualisation d'une infrastructure réseau qui est connecté à cette pluralité de stations de base, comme décrit dans la suite des présentes dans le cadre d'une architecture NFV.

Lors d'une étape S1, le gestionnaire de virtualisation reçoit une requête de dimensionnement d'une puissance électrique réservée. Cette requête informe le gestionnaire d'une demande de « scale-out » ou de « scale-in ».

Dans les présentes, un « scale-out » est un échelonnement de la puissance électrique réservée par une ou plusieurs stations de base vers le haut, pour dimensionner cette puissance électrique réservée de sorte que sa valeur soit augmentée pour devenir supérieure à une valeur prédéterminée.

Typiquement, un « scale-out » comprend une activation d'un ou de plusieurs équipements informatiques physiques, par exemple une activation de serveurs en veille, de sorte à pouvoir augmenter le nombre d'instances de fonctions virtuelles ou de machines virtuelles déployées sur cette ou ces stations de base, et allouer à ces instances plus de ressources informatiques, en particulier des ressources informatiques virtuelles d'énergie.

Dans les présentes, un « scale-in » est un échelonnement de la puissance électrique réservée par une ou plusieurs stations de base vers le bas, pour dimensionner cette puissance électrique réservée de sorte que sa valeur soit diminuée pour devenir inférieure à une valeur prédéterminée.

Typiquement, un « scale-in » comprend une désactivation d'un ou de plusieurs équipements informatiques physiques, par exemple une extinction de serveurs en veille, de sorte à pouvoir réduire le nombre d'instances de fonctions virtuelles ou de machines virtuelles déployées sur cette ou ces stations de base, et libérer des ressources informatiques, en particulier des ressources informatiques virtuelles d'énergie.

Lors d'une étape S2, le gestionnaire de virtualisation paramètre au moins un serveur informatique d'une ou de plusieurs stations de base courante parmi la pluralité de stations de base. Ce paramétrage est mis en œuvre en fonction de la nature de la requête de dimensionnement, conformément aux différents exemples de réalisation décrits dans les présentes.

Selon un premier exemple, lorsque la requête de dimensionnement correspond à une demande de « scale-out », c'est-à-dire un échelonnement vers le haut, le paramétrage effectué par le gestionnaire de virtualisation comprend une étape S3b d'allocation d'au moins une ressource informatique virtuelle, de préférence une ressource informatique virtuelle d'énergie, de sorte à augmenter la puissance électrique réservée. Comme décrit ci-après dans le cadre des architectures NFV, cette étape S3b est mise en œuvre par un module de contrôle du gestionnaire de virtualisation.

Selon un deuxième exemple, lorsque la requête de dimensionnement correspond à une demande de « scale-in », c'est-à-dire un échelonnement vers le bas, le paramétrage effectué par le gestionnaire de virtualisation comprend une étape S3a de libération d'au moins une ressource informatique virtuelle, de préférence une ressource informatique virtuelle d'énergie, de sorte à diminuer la puissance électrique réservée. Comme décrit ci-après dans le cadre des architectures NFV, cette étape S3a est mise en œuvre par un module de contrôle du gestionnaire de virtualisation.

Lors d'une étape S4, suite à l'étape S2, le gestionnaire de virtualisation met ensuite en œuvre un contrôle d'au moins une ressource informatique virtuelle de l'infrastructure réseau, ladite ressource informatique virtuelle consommant une fraction de la puissance électrique réservée, de sorte à dimensionner la puissance électrique réservée.

En particulier, lorsque l'étape S4 fait suite à l'étape S3a, le gestionnaire de virtualisation vérifie que la libération de l'au moins une ressource informatique virtuelle permet une diminution de la puissance électrique réservée.

En particulier, lorsque l'étape S4 fait suite à l'étape S3b, le gestionnaire de virtualisation vérifie que l'allocation de l'au moins une ressource informatique virtuelle permet une augmentation de la puissance électrique réservée.

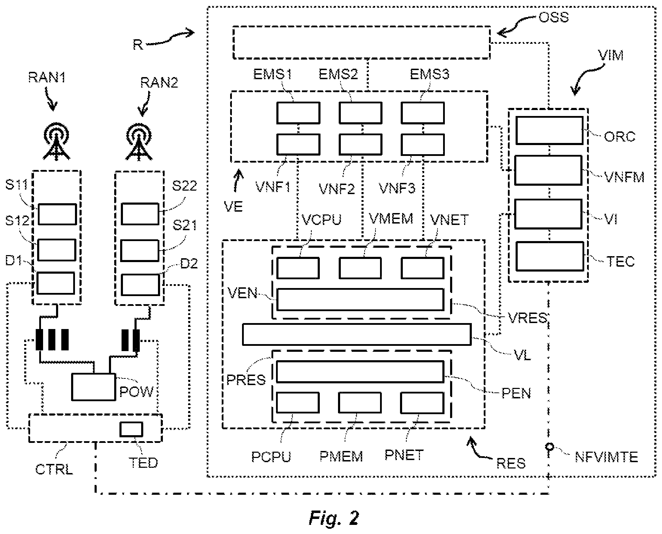

Il est maintenant fait référence à la figure 2, qui représente une vue schématique d'une infrastructure réseau R connectée à plusieurs stations de base, ici deux stations de base RAN1 et RAN2 selon un exemple de réalisation.

Comme illustré, l'infrastructure réseau R comprend une architecture NFV telle que définie par l'ETSI (« European Telecommunications Standards Institute », en anglais).

Cette architecture NFV comprend une infrastructure virtualisée NFVI (« Network Function Virtualisation Infrastructure », en anglais), qui fournit des ressources matérielles telles que des serveurs ou des cartes électroniques, ainsi que des ressources virtuelles, telles que des logiciels de virtualisation.

L'infrastructure virtualisée NFVI comprend une interface matérielle PRES apte à fournir des ressources physiques de calcul PCPU (ou PGPU, non représentées), des ressources physiques de mémoire PMEM, des ressources physiques réseau PNET et éventuellement des ressources physiques d'énergie PEN.

L'infrastructure virtualisée NFVI comprend aussi une interface virtuelle VRES apte à fournir des ressources virtuelles de calcul VCPU (ou VGPU, non représentées), des ressources virtuelles de mémoire VMEM, des ressources virtuelles réseau VNET et éventuellement des ressources virtuelles d'énergie VEN.

L'infrastructure virtualisée NFVI comprend en outre une couche de virtualisation VL assurant une liaison entre l'interface matérielle PRES et l'interface virtuelle VRES. La couche de virtualisation VL permet de découpler l'implémentation logicielle des fonctions réseaux aux ressources physiques décrites précédemment.

L'infrastructure réseau R comprend de plus un module VNF-EMS, ce module comprenant des fonctions virtuelles VNF1, VNF2 et VNF3 qui peuvent être exécutées sur des équipements ou des composants de l'infrastructure virtualisée NFVI.

Ces fonctions virtuelles VNF1, VNF2 et VNF3 sont connectées entre elles pour fournir un service réseau, et sont gérées à l'aide de systèmes de gestion élémentaire EMS1, EMS2 et EMS3 correspondants qui sont configurés pour gérer et orchestrer les ressources de l'infrastructure virtualisée NFVI. Des procédés existants permettant une telle orchestration des ressources d'une telle infrastructure virtualisée sont par exemple divulgués dans les documents US 2018/349195 A1, WO 2015/126430 A1 et US 2018/165167 A1.

L'infrastructure réseau R comprend en outre un module de gestion NFV-MAN configuré pour gérer les services réseaux de bout en bout.

Le module de gestion NFV-MAN comprend un orchestrateur ORCH qui est responsable du cycle de vie des services réseau tant au niveau logiciel que matériel.

Le module de gestion NFV-MAN comprend en outre un gestionnaire VNFM de fonctions virtuelles, connecté au module VNF-EMS, et en charge du cycle de vie des fonctions virtuelles VNF1, VNF2 et VNF3. Le module de gestion NFV-MAN permet, notamment, d'automatiser le déploiement de fonctions virtuelles. Il permet en outre de piloter la création et la suppression d'instances de fonction virtuelle ou de machine virtuelle.

Le module de gestion NFV-MAN comprend en outre un gestionnaire de virtualisation VIM, connecté aux autres éléments du module de gestion NFV-MAN, et qui est en charge de la gestion des ressources de l'infrastructure virtualisée NFVI.

Par ailleurs, le module de gestion NFV-MAN est connecté à un module de service OSS, qui est configuré pour transmettre à celui-ci des informations telles que des informations de profil, des informations de domaine, des commandes d'un opérateur ou d'un gestionnaire de l'infrastructure réseau R, etc.

Comme illustré, l'infrastructure réseau R, et en particulier le module de gestion NFV-MAN du gestionnaire de virtualisation VIM, est connecté(e) à un contrôleur CTRL des stations de base RAN1 et RAN2.

Ces stations de base, qui sont par exemple gérées par un opérateur de télécommunications donné, comprennent chacune des équipements qui peuvent être soit physiques soit virtuels, par exemple des serveurs informatiques banalisés ou des fonctions virtuelles configurées pour traiter des signaux radio. De telles fonctions virtuelles peuvent être installées sur des serveurs informatiques banalisés ou des centres de données.

En particulier, les équipements de la station de base RAN1 comprennent des serveurs informatiques S11 et S12, tandis que les équipements de la station de base RAN2 comprennent des serveurs informatiques S21 et S22. Chacun de ces serveurs informatiques offre des ressources comprenant des composantes de calcul, de stockage, de réseau et/ou d'énergie. Avantageusement, ces ressources peuvent être dimensionnées en fonction des contraintes d'équipements physiques ou de fonctions virtuelles aptes à consommer celles-ci.

En outre, les équipements de la station de base RAN1 comprennent un dispositif de distribution D1 tandis que les équipements de la station de base RAN2 comprennent un dispositif de distribution D2, chacun de ces dispositifs de distribution étant connecté au contrôleur CTRL. Ces dispositifs de distribution D1 et D2 sont typiquement munis de capteurs de puissances aptes à mesurer, à tout instant, la puissance électrique consommée par les stations de base.

Le contrôleur CTRL est par exemple un dispositif superviseur, tel qu'un micro-ordinateur, qui est configuré pour connaître la puissance électrique consommée de RAN1 et de RAN2 à partir des puissances électriques mesurées par D1 et D2.

Le contrôleur CTRL est en outre connecté à un dispositif d'alimentation électrique, par exemple une centrale électrique POW, elle-même connectée ou comprenant un ensemble de batteries B1 à B5. Ces batteries peuvent aussi être éloignées de la centrale électrique POW et connectées séparément aux stations de base RAN1 et RAN2. Dans le cas illustré, les batteries B1 à B3 alimentent électriquement la station de base RAN1 et les batteries B4 et B5 alimentent électriquement la station de base RAN2. Les dispositifs de distribution D1 et D2 gèrent la réception de l'énergie électrique en provenance de la centrale électrique POW et des batteries connectées à la station comprenant ceux-ci.

De préférence, les batteries comprennent des disjoncteurs adaptatifs qui sont configurés pour adapter la quantité de puissance électrique fournie par ces batteries aux équipements des stations de base. Dans ce cas, le contrôleur CTRL est configuré pour moduler le seuil de puissance électrique maximale défini par ces disjoncteurs adaptatifs. Plus ce seuil est bas, moins les batteries électriques seront aptes à fournir de l'énergie électrique en raison de la modulation imposée par les disjoncteurs, et donc moins la puissance consommée par la station de alimentée par ces batteries et la centrale électrique POW sera importante.

Le contrôleur CTRL est aussi configuré pour informer l'infrastructure réseau R et les dispositifs de distribution D1 et D2 des stations de base RAN1 et RAN2 d'une éventuelle variation importante de l'alimentation électrique.

Ainsi, le contrôleur CTRL peut agir sur des disjoncteurs adaptatifs de batteries, ces disjoncteurs adaptatifs modulant le seuil de puissance électrique maximale correspondant.

Par exemple, lorsque la station de base RAN1 nécessite de se voir fournir de manière ininterrompue une puissance électrique donnée malgré une rupture subite des câbles d'alimentation électrique entre RAN1 et la centrale électrique POW, le contrôleur CTRL peut non seulement agir sur les disjoncteurs adaptatifs associés aux batteries B1 à B3 pour compenser l'absence d'alimentation par la centrale électrique POW, mais aussi sur les disjoncteurs adaptatifs associés aux batteries B4 et B5 pour permettre à ces batteries de fournir une puissance électrique suffisante à RAN1.

Ainsi, une interaction est possible entre le contrôleur CTRL, les batteries B1 à B5 des stations de base RAN1 et RAN2, et l'infrastructure réseau R. En particulier, le gestionnaire de virtualisation VIM de l'infrastructure réseau R interagit avec ces éléments afin de produire un dimensionnement, entre les stations de base RAN1 et RAN2, de la puissance électrique réservée par la station de base RAN1, ici dite « courante ».

Le contrôleur CTRL comprend un domaine d'environnement technique TED, qui sera décrit ci-après. En particulier, la connexion entre l'infrastructure réseau R et le contrôleur CTRL se fait via un point d'interface NFVIMTE, qui relie le domaine d'environnement technique TED au gestionnaire de virtualisation VIM.

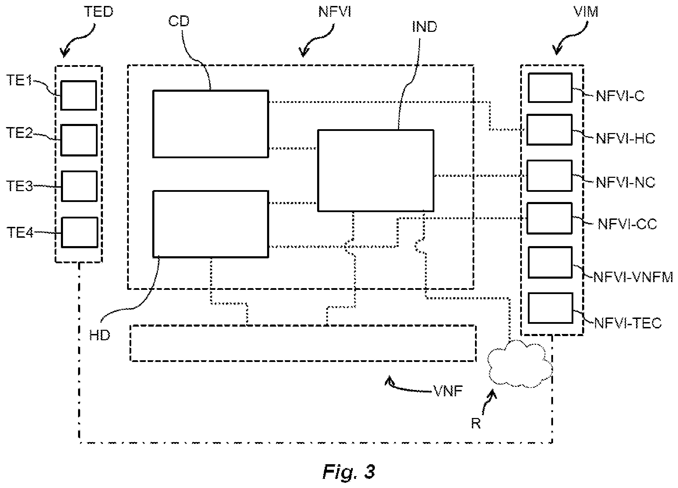

Il est maintenant fait référence à la figure 3, qui représente une vue schématique d'une connexion entre une infrastructure réseau R et un domaine d'environnement technique TED selon un exemple de réalisation.

Le domaine d'environnement technique TED, qui est généralement compris dans un contrôleur CTRL, comprend différents modules configurés pour gérer des paramètres d'une station de base. Par exemple, le domaine d'environnement technique TED comprend un module TE1 responsable de l'air conditionné au sein d'un local de la station de base, un module TE2 responsable de l'alimentation sans interruption (« ASI ») en courant alternatif stable d'équipements de la station de base, un module TE3 responsable de l'alimentation en courant continu d'équipements de la station de base et un module TE4 responsable d'un contrôle de tension de courant continu, par exemple un contrôleur de type 400 VDC, de la station de base.

En outre, le domaine d'environnement technique TED est configuré pour réaliser un inventaire ou une cartographie des puissances électriques réservées par une ou plusieurs stations de base auxquelles il est connecté. Il est en outre configuré pour réaliser un inventaire ou une cartographie des puissances électriques mesurées en cette ou en ces stations de base.

Comme décrit précédemment dans le cadre d'architectures NFV, l'infrastructure réseau R comprend un module VNF-EMS, une infrastructure virtualisée NFVI et un gestionnaire de virtualisation VIM connectés entre eux.

En particulier, l'infrastructure virtualisée NFVI comprend un domaine de calcul CD, un domaine hyperviseur HD et un domaine d'infrastructure réseau IND.

Le domaine de calcul CD comprend des ressources matérielles informatiques et des ressources matérielles de stockage, ces ressources étant physiques et utilisables pour l'hébergement de fonctions virtuelles. Le domaine de calcul CD fournit également une interface au domaine d'infrastructure réseau IND, mais ne prend pas en charge la connectivité réseau entre les fonctions virtuelles.

Le domaine hyperviseur HD comprend une partie de la couche de virtualisation VL, ainsi que des ressources informatiques virtuelles et des ressources de stockage virtuelles. Le domaine hyperviseur HD est configuré pour gérer les ressources du domaine de calcul CD supportant des machines virtuelles et des fonctions virtuelles exécutées sur celles-ci. Le domaine hyperviseur HD implémente essentiellement la couche de virtualisation VL entre les ressources informatiques physiques et virtuelles de l'infrastructure virtualisée NFVI.

Les fonctions virtuelles peuvent s'exécuter en tant que composants logiciels sur des conteneurs du domaine hyperviseur HD, ces conteneurs s'exécutant à leur tour sur du matériel physique du domaine de calcul CD.

Le domaine d'infrastructure réseau IND comprend une autre partie de la couche de virtualisation VL, des ressources virtuelles de réseau ainsi que des ressources physiques de réseau. Le domaine d'infrastructure réseau IND est chargé de fournir la connectivité nécessaire pour les communications entre fonctions virtuelles et entre ces fonctions virtuelles et les entités responsables de leur orchestration et de leur gestion. Ici, le domaine d'infrastructure réseau IND est interfacé avec le domaine de calcul CD, et indirectement avec le domaine hyperviseur HD.

Le gestionnaire de virtualisation VIM comprend différents modules, parmi lesquels un module de contrôle NFVI-C, un module de contrôle hyperviseur NFVI-HC, un module de contrôle réseau NFVI-NC, un module de contrôle de calcul NFVI-CC ainsi qu'un module de contrôle d'environnement technique NFVI-TEC. Le gestionnaire d'infrastructure de virtualisation VIM comprend en outre un module de gestion de fonction virtuelle, NFVI-VNFM. Le module de contrôle d'environnement technique NFVI-TEC est connecté domaine d'environnement technique TED, situé à l'extérieur de l'infrastructure réseau R.

En particulier, le module de contrôle d'environnement technique NFVI-TEC est configuré pour cartographier l'ensemble des équipements physiques, en particulier des serveurs informatiques, disponibles par une station de base.

Comme illustré, le domaine de calcul CD est connecté au domaine d'instructions IND ainsi qu'au module hyperviseur NFVI-HC. Le domaine hyperviseur HD est connecté au module VNF-EMS, au domaine d'infrastructure réseau IND ainsi qu'au module de contrôle de calcul NFVI-CC. Le domaine d'infrastructure réseau IND est donc connecté au domaine de calcul CD et au domaine hyperviseur HD, et est en outre connecté au module de contrôle de réseau NFVI-NC.

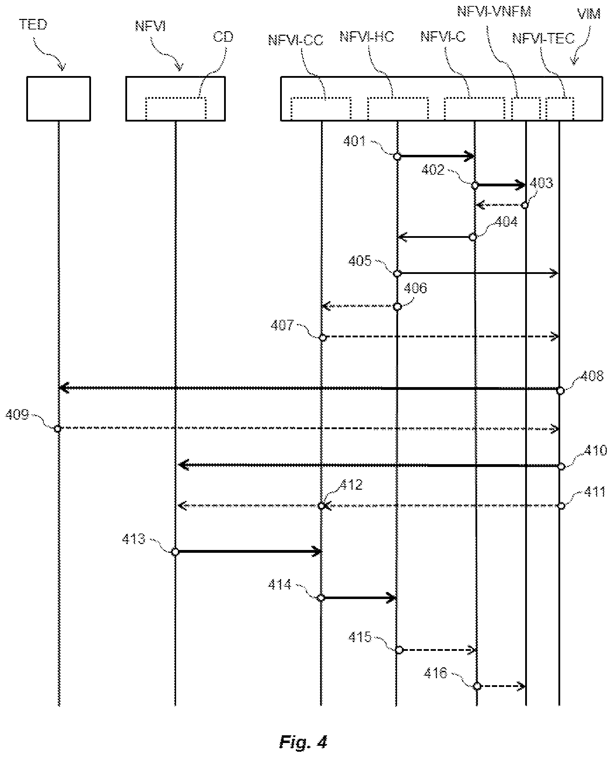

Il est maintenant fait référence à la figure 4, qui représente un diagramme de flux illustrant différentes étapes 401 à 416 d'un procédé de dimensionnement d'une puissance électrique réservée selon un premier mode de réalisation.

Ce premier mode de réalisation correspond, ici, au cas d'une demande d'augmentation d'une puissance réservée par une station de base.

En particulier, les étapes précitées permettent de mettre en œuvre une répartition d'au moins un type de ressource entre plusieurs stations de base, par exemple via l'activation d'un ou de plusieurs serveurs informatiques d'une station de base spécifique parmi ces plusieurs stations de base et éventuellement en créant des instances de fonction virtuelle ou de machine virtuelle.

Le module de contrôle de calcul NFVI-CC du gestionnaire d'infrastructure de virtualisation VIM est configuré pour cartographier les serveurs informatiques disponibles pour une station de base donnée. Le module de contrôle hyperviseur NFVI-HC est configuré pour cartographier tous les serveurs informatiques d'une station de base donnée et permet en outre de cartographier les éventuelles machines virtuelles présentes sur l'un de ces serveurs.

Le domaine d'environnement technique TED est configuré pour cartographier les puissances réservées, et plus généralement les ressources réservées, par une station de base donnée, d'une part, et pour cartographier les puissances mesurées et les ressources mesurées par cette station de base, d'autre part.

Lors de l'étape 401, le module de contrôle hyperviseur NFVI-HC transmet un message à destination du module de contrôle NFVI-C, ce message étant configuré pour lui notifier l'observation d'un dépassement de consommation pour une ressource réservée par une machine virtuelle. Il peut s'agir par exemple d'un dépassement d'une puissance électrique réservée par une machine virtuelle ou une instance de fonction virtuelle parmi l'une des fonctions virtuelles VNF1, VNF2 et VNF3 du module VNF-EMS de l'infrastructure réseau R.

Lors de l'étape 402, le module de contrôle NFVI-C transmet un message à destination du module de gestion de fonction virtuelle NFVI-VNFM, ce message comprenant une demande de « scale-out » sur une instance courante de fonction virtuelle.

Optionnellement, lors de l'étape 403, suite au message reçu lors de l'étape 402, le module de gestion de fonction virtuelle NFVI-VNFM transmet au module de contrôle NFVI-C un message de réponse comprenant une demande d'instanciation d'une nouvelle fonction virtuelle, par exemple en vue d'une création d'une nouvelle machine virtuelle.

Lors de l'étape 404, soit sur réception du message transmis lors de l'étape 401 par le module de contrôle hyperviseur NFVI-HC, soit sur réception du message de réponse transmis lors de l'étape 403 par le module de gestion de fonction virtuelle NFVI-VNFM, le module de contrôle NFVI-C transmet un message à destination du module de contrôle hyperviseur NFVI-HC pour lui demander une ressource d'un type donné. De préférence, cette ressource est une ressource virtuelle d'énergie. Cette ressource peut aussi être une ressource virtuelle de calcul, une ressource virtuelle de mémoire ou une ressource virtuelle réseau.

Lors de l'étape 405 suivant l'étape 404, le module de contrôle hyperviseur NFVI-HC transmet à destination du module de contrôle d'environnement technique NFVI-TEC un message de demande d'activation d'un serveur en veille, ce message étant configuré pour permettre la sélection du ou des serveurs à activer dans une liste donnée.

Optionnellement, l'étape 405 comprend deux étapes intermédiaires 406 et 407, l'étape 406 comprenant la transmission de ce message du module de contrôle hyperviseur NFVI-HC au module de contrôle de calcul NFVI-CC et l'étape 407 comprenant la transmission de ce message du module de contrôle de calcul NFVI-CC au module de contrôle d'environnement technique NFVI-TEC.

Pour rappel, le module de contrôle de calcul NFVI-CC est configuré pour cartographier, en association avec le module de contrôle hyperviseur NFVI-HC, les serveurs des stations de base. En outre, le module de contrôle de calcul NFVI-CC est configuré pour planifier l'instant et la localisation d'une allocation d'une ressource sur un serveur informatique.

Avantageusement, le message reçu par module de contrôle de calcul NFVI-CC lors de l'étape 406 permet ainsi de fournir des informations utiles pour une instanciation d'une fonction virtuelle. En particulier, ceci facilite, lors de la mise en œuvre d'étapes ultérieures, une allocation d'une ressource sur un serveur informatique en même temps qu'une activation d'une instance de fonction virtuelle.

Lors de l'étape 408, le module de contrôle d'environnement technique NFVI-TEC transmet au domaine d'environnement technique TED une requête d'augmentation de la puissance réservée par la station de base. En particulier, cette requête peut être directement transmise à un contrôleur CTRL connecté à une centrale de production d'énergie électrique ou à des batteries électriques alimentant une ou plusieurs stations de base.

Optionnellement, l'étape 409 comprend la transmission d'un message de confirmation en réponse au message de l'étape 408, par le domaine d'environnement technique TED à destination du module de contrôle d'environnement technique NFVI-TEC. Ce message permet de confirmer la demande d'augmentation de la puissance réservée par la station de base.

Lors de l'étape 410, le module de contrôle d'environnement technique NFVI-TEC transmet, à destination du domaine de calcul CD de l'infrastructure de fonction réseau virtualisée NFVI, une demande d'activation de serveur en veille. Cette demande peut correspondre à la demande précédemment reçue lors de l'étape 405, et sa transmission faite suite au message de confirmation correspondante à l'étape 409.

Optionnellement, l'étape 410 comprend deux étapes intermédiaires 411 et 412, l'étape 411 comprenant une transmission de la demande d'activation du module de contrôle d'environnement technique NFVI-TEC au module de contrôle de calcul NFVI-CC et l'étape 412 comprenant la transmission de ce message du module de contrôle de calcul NFVI-CC au domaine de calcul CD.

Lors de l'étape 413, le domaine de calcul CD active un serveur informatique en veille et confirme cette activation par le biais d'une transmission d'un message correspondant au module de contrôle de calcul NFVI-CC.

Lors de l'étape 414, le module de contrôle de calcul NFVI-CC transmet au module de contrôle hyperviseur NFVI-HC un message confirmant l'activation d'un serveur en veille.

Optionnellement, lors de l'étape 415, le module de contrôle hyperviseur NFVI-HC met en œuvre une allocation d'une ressource sur le serveur activé, en particulier une ressource de même type que celui requis par le message transmis à destination du module de contrôle hyperviseur NFVI-HC lors de l'étape 404. En outre, l'étape 415 comprend une activation d'une instance de fonction virtuelle ou de machine virtuelle sur le serveur activé. Cette allocation et cette activation sont notifiées au module de contrôle NFVI-C.

Optionnellement, lors de l'étape 416, et sur réception de la notification d'allocation et d'activation de l'étape 415, le module de contrôle NFVI-C transmet un message de confirmation de l'activation de l'instance au module de gestion de fonction virtuelle NFVI-VNFM.

Ceci permet de fournir un procédé de répartition de la puissance électrique réservée entre plusieurs stations de base, conformément à une demande d'augmentation de la puissance réservée par au moins une station de base courante parmi une pluralité.

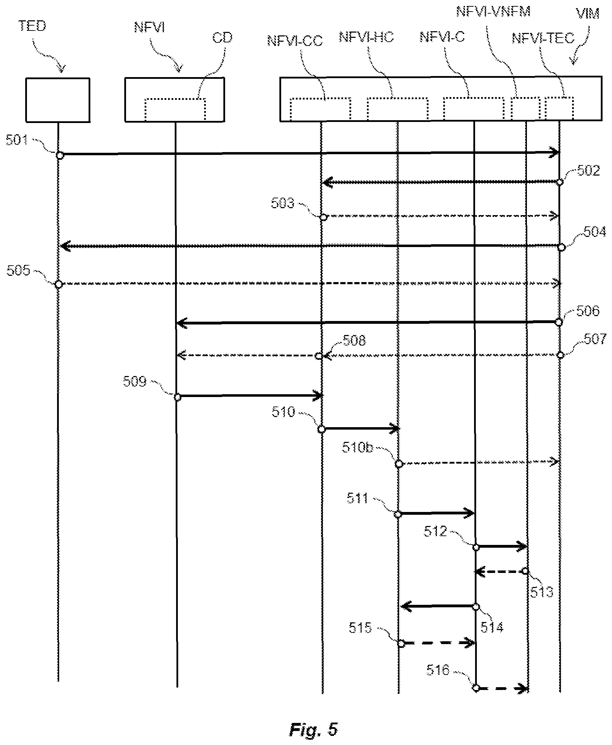

Il est maintenant fait référence à la figure 5, qui représente un diagramme de flux illustrant différentes étapes 501 à 516 d'un procédé de dimensionnement d'une puissance électrique réservée selon un deuxième mode de réalisation.

Ce deuxième mode de réalisation correspond, ici, au cas d'un dépassement d'une puissance réservée par une station de base.

Comme dans le premier mode de réalisation, les étapes précitées permettent de mettre en œuvre une répartition d'au moins un type de ressource entre plusieurs stations de base en activant un ou de plusieurs serveurs informatiques d'une station de base spécifique parmi ces stations de base et éventuellement en créant des instances de fonction virtuelle ou de machine virtuelle.

Dans le cas présent, cependant, une notification d'une puissance réservée par une station de base courant est initialement fournie au gestionnaire d'infrastructure de virtualisation VIM par le domaine d'environnement technique TED.

En particulier, lors de l'étape 501, le domaine d'environnement technique TED transmet cette notification au module de contrôle d'environnement technique NFVI-TEC.

Le module de contrôle d'environnement technique NFVI-TEC, qui est configuré pour cartographier les serveurs informatiques des stations de base, peut aussi effectuer un choix de serveur en veille à activer parmi ceux-ci. Lors de l'étape 502, et en réponse à la notification reçue lors de l'étape 501, le module de contrôle d'environnement technique NFVI-TEC transmet une demande d'activation d'un serveur en veille à destination du module de contrôle de calcul NFVI-CC.

Optionnellement, lors de l'étape 503, le module de contrôle de calcul NFVI-CC transmet un message de réponse à destination du module de contrôle d'environnement technique NFVI-TEC, ce message de réponse comprenant une indication d'un serveur en veille disponible pour activation parmi une liste de serveurs.

Les étapes 504, 505, 506, 507, 508, 509 et 510 sont similaires, respectivement aux étapes 408, 409, 410, 411, 412, 413 et 414 du premier mode de réalisation.

Optionnellement, lors d'une étape 510b suivant l'étape 510, le module de contrôle hyperviseur NFVI-HC transmet à destination du module de contrôle d'environnement technique NFVI-TEC le message confirmant l'activation d'un serveur en veille afin de l'en informer.

Lors de l'étape 511, suivant l'étape 509, 510 et/ou 510b, le module de contrôle hyperviseur NFVI-HC met en œuvre une identification de l'instance de fonction virtuelle ou de la machine virtuelle ayant fait l'objet du dépassement de la puissance électrique réservée en lien avec la notification de dépassement de l'étape 501. Cette identification est notifiée au module de contrôle NFVI-C.

Lors de l'étape 512, le module de contrôle NFVI-C transmet un message à destination du module de gestion de fonction virtuelle NFVI-VNFM, ce message comprenant une demande de « scale-out » sur l'instance identifiée de fonction virtuelle ou de la machine virtuelle identifiée.

Optionnellement, lors de l'étape 513, et en réponse reçu lors de l'étape 512, le module de gestion de fonction virtuelle NFVI-VNFM transmet une demande de création d'une nouvelle instance de fonction virtuelle ou de machine virtuelle à destination du module de contrôle NFVI-C.

Lors de l'étape 514, et comme pour l'étape 404 du premier mode de réalisation, le module de contrôle NFVI-C transmet un message à destination du module de contrôle hyperviseur NFVI-HC pour lui demander une ressource, de préférence une ressource virtuelle d'énergie, ou une autre ressource telle qu'une ressource virtuelle de calcul, une ressource virtuelle de mémoire ou une ressource virtuelle réseau.

Optionnellement, les étapes 515 et 516 sont ensuite mises en œuvre, les étapes 515 et 516 étant similaires, respectivement, aux étapes 415 et 416 du premier mode de réalisation.

Ceci permet de fournir un procédé de répartition de la puissance électrique réservée entre plusieurs stations de base, conformément à une demande d'augmentation de la puissance réservée par au moins une station de base courante.

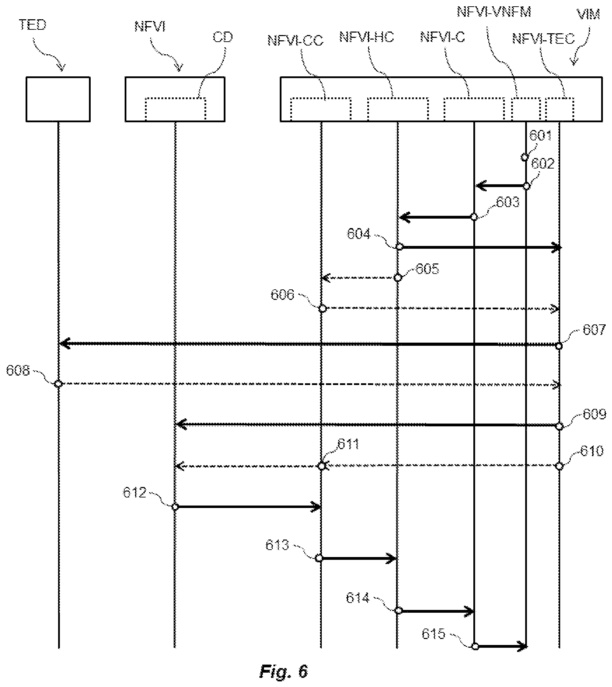

Il est maintenant fait référence à la figure 6, qui représente un diagramme de flux illustrant différentes étapes 601 à 615 d'un procédé de dimensionnement d'une puissance électrique réservée par une station de base selon un troisième mode de réalisation.

Ce troisième mode de réalisation correspond, ici, au cas d'une augmentation de trafic sur une fonction virtuelle de l'infrastructure réseau.

Comme dans les premier et deuxième modes de réalisation, les étapes précitées permettent de mettre en œuvre une répartition d'au moins un type de ressource entre plusieurs stations de base en activant un ou plusieurs serveurs informatiques d'une station de base spécifique parmi ces stations de base et éventuellement en créant des instances de fonction virtuelle ou de machine virtuelle.

Dans le cas présent, cependant, un message comprenant une demande de « scale-out » sur une instance de fonction virtuelle ou de machine virtuelle est initialement fournie au gestionnaire d'infrastructure de virtualisation VIM.

En particulier, lors de l'étape 601, une instance de fonction virtuelle ou de machine virtuelle (non représentée) transmet ce message au module de gestion de fonction virtuelle NFVI-VNFM du gestionnaire d'infrastructure de virtualisation VIM.

Lors de l'étape 602, le module de gestion de fonction virtuelle NFVI-VNFM transmet un message à destination du module de contrôle NFVI-C, ce message comprenant une demande de création d'une instance de fonction virtuelle ou de machine virtuelle.

Les étapes 603, 604, 605, 606, 607, 608, 609, 610, 611, 612, 613 et 614 sont similaires, respectivement, aux étapes 404, 405, 406, 407, 408, 409, 410, 411, 412, 413, 414 et 415 du premier mode de réalisation. De même, les étapes 607, 608, 609, 610, 611, 612, 613, 614 et 615 sont similaires, respectivement, aux étapes 504, 505, 506, 507, 508, 509, 510, 511 et 512 du deuxième mode de réalisation.

Ceci permet de fournir un procédé de répartition de la puissance électrique réservée entre plusieurs stations de base, conformément à une demande de « scale-out » faisant suite à une augmentation de trafic sur une instance de fonction virtuelle ou sur une machine virtuelle.

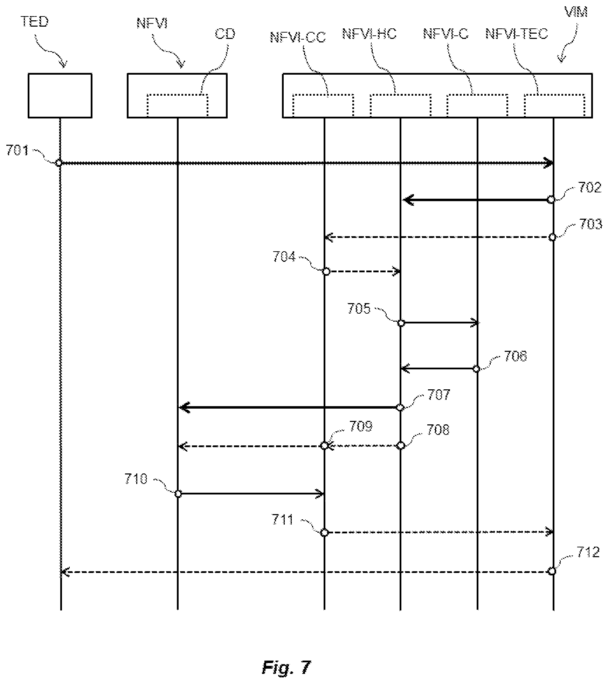

Il est maintenant fait référence à la figure 7, qui représente un diagramme de flux illustrant différentes étapes 701 à 712 d'un procédé de dimensionnement d'une puissance électrique réservée par une station de base selon un quatrième mode de réalisation.

Ce quatrième mode de réalisation correspond, ici, au cas d'une demande de diminution d'une puissance réservée par une station de base.

En particulier, les étapes précitées permettent de mettre en œuvre une répartition d'au moins un type de ressource entre plusieurs stations de base en éteignant un ou de plusieurs serveurs informatiques d'une station de base spécifique parmi ces stations de base et éventuellement en supprimant des instances de fonction virtuelle ou de machine virtuelle.

Dans le cas présent, une notification de diminution d'une puissance consommée par une station de base est initialement fournie au gestionnaire d'infrastructure de virtualisation VIM par le domaine d'environnement technique TED.

En particulier, lors de l'étape 701, le domaine d'environnement technique TED transmet cette notification au module de contrôle d'environnement technique NFVI-TEC du gestionnaire d'infrastructure de virtualisation VIM. Par exemple, cette demande peut être émise sur observation, par le domaine d'environnement technique TED, du fait qu'une puissance consommée par une station de base est inférieure à la puissance réservée par celle-ci.

Lors de l'étape 702, et en réponse à la notification reçue lors de l'étape 701, le module de contrôle d'environnement technique NFVI-TEC transmet un message comprenant une demande d'extinction d'un serveur informatique à destination du module de contrôle hyperviseur NFVI-HC. De préférence, ce message permet une sélection du ou des serveurs à éteindre parmi une liste donnée. Le module de contrôle hyperviseur NFVI-HC est alors responsable de la sélection du ou des serveurs à éteindre.

Optionnellement, l'étape 702 comprend deux étapes intermédiaires 703 et 704, l'étape 703 comprenant une transmission de la demande d'extinction du module de contrôle d'environnement technique NFVI-TEC au module de contrôle de calcul NFVI-CC, et l'étape 704 comprenant la transmission de ce message du module de contrôle de calcul NFVI-CC au module de contrôle hyperviseur NFVI-HC.

Lors de l'étape 705, le module de contrôle hyperviseur NFVI-HC met en œuvre une identification d'une instance de fonction virtuelle ou de machine virtuelle à supprimer. Cette identification est notifiée au module de contrôle NFVI-C.

Optionnellement, suite à l'étape 705, le module de contrôle NFVI-C peut transmettre au module de gestion de fonction virtuelle NFVI-VNFM, qui ici n'est pas représenté, une demande d'évacuation d'une ressource sur l'instance identifiée de fonction virtuelle ou de machine virtuelle.

Lors de l'étape 706, le module de contrôle NFVI-C transmet un message à destination du module de contrôle hyperviseur NFVI-HC pour mettre en œuvre une libération d'une ressource, de préférence une ressource virtuelle d'énergie, ou une autre ressource telle qu'une ressource virtuelle de calcul, une ressource virtuelle de mémoire ou une ressource virtuelle réseau.

Lors de l'étape 707, le module de contrôle hyperviseur NFVI-HC transmet, à destination du domaine de calcul CD de l'infrastructure de fonction réseau virtualisée NFVI, une demande d'extinction d'un serveur. Cette demande peut correspondre à la demande précédemment reçue lors de l'étape 702.

Optionnellement, l'étape 707 comprend deux étapes intermédiaires 708 et 709, l'étape 708 comprenant une transmission de la demande d'extinction du module de contrôle hyperviseur NFVI-HC au module de contrôle de calcul NFVI-CC, et l'étape 704 comprenant la transmission de ce message du module de contrôle de calcul NFVI-CC au domaine de calcul CD.

Lors de l'étape 710, le domaine de calcul CD éteint un serveur informatique et confirme cette extinction par le biais d'une transmission d'un message correspondant au module de contrôle de calcul NFVI-CC.

Optionnellement, lors de l'étape 711, le module de contrôle de calcul NFVI-CC transmet une notification indiquant l'extinction du serveur au module de contrôle d'environnement technique NFVI-TEC.

Optionnellement, lors de l'étape 712, sur réception de cette notification, le module de contrôle d'environnement technique NFVI-TEC transmet un message à destination du domaine d'environnement technique TED, ce message confirmant la diminution de la puissance consommée par la station de base.

Ceci permet de fournir un procédé de répartition de la puissance électrique réservée entre plusieurs stations de base, conformément à une demande de diminution de la puissance réservée par une station de base, notamment une demande de « scale-in ».

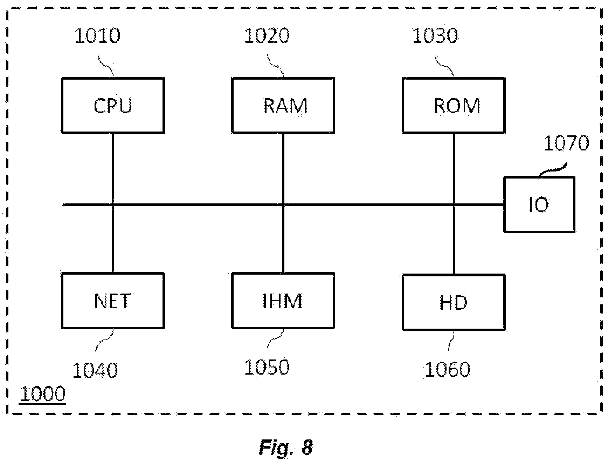

La figure 8 représente un bloc-diagramme schématique d'un circuit de traitement informatique selon un exemple de mise en œuvre.

Selon un exemple, ledit circuit de traitement informatique est un processeur.

En particulier, ce circuit de traitement informatique est un système sur puce 1000. Par exemple, le système sur puce 1000 est adapté pour être intégré à un ordonnanceur ORD prévu pour être connecté à une infrastructure réseau R, et est configuré pour mettre en œuvre un procédé de dimensionnement d'une puissance électrique réservée selon l'une ou l'autre des réalisations décrites précédemment.

Le système sur puce 1000 comporte un bus de communication connecté, par exemple, à une unité centrale de traitement 1010, tel qu'un processeur ou un microprocesseur, et notée CPU.

Le système sur puce 1000 comporte aussi une mémoire à accès aléatoire 1020, notée RAM, pour mémoriser le code exécutable du procédé de dimensionnement ainsi que les registres adaptés à

Pour la mise en œuvre du procédé selon des réalisations décrites précédemment, la capacité de mémoire du système sur puce 1000 peut être complétée par une mémoire RAM optionnelle connectée à un port d'extension, par exemple.

En outre, le système sur puce 1000 comporte une mémoire morte 1030, notée ROM, pour stocker des programmes informatiques pour la mise en œuvre des réalisations précédemment décrites, ainsi qu'une interface réseau 1040 qui est normalement connectée à un réseau de communication sur lequel des données numériques à traiter sont transmises ou reçues.

L'interface réseau 1040 peut être une seule interface réseau, ou composée d'un ensemble d'interfaces réseau différentes (par exemple filaire et sans fil, interfaces ou différents types d'interfaces filaires ou sans fil).

Des paquets de données sont envoyés sur l'interface réseau pour la transmission ou sont lues à partir de l'interface de réseau pour la réception sous le contrôle de l'application logiciel exécutée dans le processeur ou le microprocesseur 1010.

Par ailleurs, le système sur puce 1000 comporte une interface utilisateur 1050 pour recevoir des entrées d'un utilisateur ou pour afficher des informations à un utilisateur, un support de stockage optionnel 1060 noté HD.

Le système sur puce 1000 comporte en outre un module d'entrée-sortie 1070, noté IO, pour la réception, l'envoi de données depuis ou vers des périphériques externes tels que disque dur, support de stockage amovible ou autres. En particulier, le module d'entrée-sortie 1070 permet la réception d'une notification telle qu'une requête de dimensionnement depuis un dispositif connecté au système sur puce 1000.

Dans un exemple présenté ici, le code exécutable peut être stocké dans une mémoire morte 1030, sur le support de stockage 1060 ou sur un support amovible numérique tel que par exemple un disque.

Selon une variante, le code exécutable des programmes peuvent être reçu au moyen d'un réseau de communication, via l'interface réseau 1040, afin d'être stocké dans le support de stockage 1060, avant d'être exécuté.

L'unité centrale de traitement 1010 est adaptée pour commander et diriger l'exécution des instructions ou des portions de code logiciel du programme ou des programmes selon l'un des exemples de réalisation décrits précédemment, instructions qui sont stockées dans l'un des moyens de stockage précités. Après la mise sous tension, le CPU 1010 est capable d'exécuter des instructions stockées dans la mémoire RAM principale 1020, relatives à une application logicielle, après que ces instructions aient été chargées de la ROM par exemple.

En particulier, l'unité centrale de traitement 1010 et/ou l'interface réseau 1040 sont adaptés pour modifier les paramètres d'au moins un serveur informatique. L'unité centrale de traitement 1010 et/ou l'interface réseau 1040 sont aussi adaptés pour contrôler une ressource informatique virtuelle de l'infrastructure réseau en fonction du paramétrage d'un serveur informatique.

Par exemple, le paramétrage d'un serveur informatique comprend l'activation, l'extinction, la mise en veille de ce serveur, ou encore le contrôle d'une ressource informatique associée à ce serveur, par exemple une libération d'une ressource ou une allocation d'une ressource à ce serveur.
Dans l'exemple présenté ici, le système sur puce 1000 est un appareil programmable qui utilise un logiciel. Toutefois, à titre subsidiaire, la présente description peut être mise en œuvre dans n'importe quel type de matériel (par exemple, sous la forme d'un circuit intégré spécifique ou ASIC).

## Revendications

1. Procédé de dimensionnement d'une puissance électrique réservée par au moins une station de base courante (RANC) parmi une pluralité de stations de base (RAN1, RAN2) connectées à un gestionnaire de virtualisation (VIM) d'une infrastructure réseau (R), ledit procédé étant mis en œuvre par ledit gestionnaire de virtualisation, le procédé comprenant les étapes suivantes :
- recevoir (S1) une requête de dimensionnement de la puissance électrique réservée, la requête de dimensionnement étant un échelonnement de la puissance électrique réservée pour ladite au moins une stations de base vers le haut, pour dimensionner cette puissance électrique réservée de sorte que sa valeur soit augmentée pour devenir supérieure à une valeur prédéterminée ou un échelonnement de la puissance électrique réservée par ladite au moins une stations de base vers le bas, pour dimensionner cette puissance électrique réservée de sorte que sa valeur soit diminuée pour devenir inférieure à une valeur prédéterminé ;
- paramétrer (S2), en fonction de l'échelonnement contenu dans de ladite requête de dimensionnement, au moins un serveur informatique (S11, S12, S21, S22) de l'au moins une station de base courante, le paramétrage comprenant l'extinction et/ou l'activation dudit au moins un serveur informatique (S11, S12, S21, S22) ; et
- contrôler (S4), en fonction du paramétrage dudit au moins un serveur informatique, au moins une ressource informatique virtuelle de l'infrastructure réseau, ladite ressource informatique virtuelle consommant une fraction de la puissance électrique réservée, de sorte à dimensionner la puissance électrique réservée, sur ledit au moins un serveur informatique (S11, S12, S21, S22).

2. Procédé selon la revendication 1, dans lequel le paramétrage dudit au moins un serveur informatique comprend une extinction du serveur informatique, et le contrôle de ladite au moins une ressource informatique virtuelle comprend une libération (S3a), par un module de contrôle (NFVI-CC) que comprend le gestionnaire de virtualisation, de l'au moins une ressource informatique virtuelle de sorte à diminuer la puissance électrique réservée.

3. Procédé selon la revendication 2, dans lequel la requête de dimensionnement comprend une demande de diminution de la puissance électrique réservée, ladite demande de diminution étant émise par un dispositif de contrôle de puissance électrique (CTRL) à destination d'un module de contrôle environnemental (NFVI-TEC) que comprend le gestionnaire de virtualisation, ledit dispositif de contrôle de puissance électrique étant connecté à l'au moins une station de base courante.

4. Procédé selon la revendication 2 ou 3, dans lequel la libération de l'au moins une ressource informatique virtuelle comprend, sur extinction du serveur informatique, une suppression d'au moins une fonction virtuelle (VNF1, VNF2, VNF3) dans l'infrastructure réseau, ladite suppression étant mise en œuvre par un module de gestion de fonctions virtuelles (NFVI-VNFM) que comprend le gestionnaire de virtualisation.

5. Procédé selon la revendication 1, dans lequel le paramétrage dudit au moins un serveur informatique comprend une activation du serveur informatique, et le contrôle de ladite au moins une ressource informatique virtuelle comprend une allocation (S3b), par un module de contrôle (NFVI-CC) que comprend le gestionnaire de virtualisation, de l'au moins une ressource informatique virtuelle sur le serveur informatique activé.

6. Procédé selon la revendication 5, dans lequel la requête de dimensionnement comprend une notification d'un dépassement de la puissance électrique réservée, ladite notification de dépassement étant émise par un module hyperviseur (NFVI-HC) que comprend le gestionnaire de virtualisation, ou une notification d'une augmentation de trafic émise par un module de gestion de fonctions virtuelles (NFVI-VNFM) que comprend le gestionnaire de virtualisation.

7. Procédé selon la revendication 5 ou 6, dans lequel l'allocation de l'au moins une ressource informatique virtuelle comprend, sur activation du serveur informatique, une instanciation d'au moins une fonction virtuelle (VNF1, VNF2, VNF3) dans l'infrastructure réseau, ladite instanciation étant mise en œuvre par un module de gestion de fonctions virtuelles (NFVI-VNFM) que comprend le gestionnaire de virtualisation.

8. Procédé selon l'une des revendications précédentes, dans lequel l'au moins une ressource informatique virtuelle est une ressource informatique virtuelle de puissance électrique comprenant une composante choisie parmi une composante de calcul, une composante de stockage, une composante de mémoire et une composante de réseau.

9. Programme informatique comportant des instructions pour la mise en œuvre du procédé selon l'une des revendications 1 à 8, lorsque lesdites instructions sont exécutées par un processeur d'un circuit de traitement informatique.

10. Support de stockage d'informations, amovible ou non, partiellement ou totalement lisible par un ordinateur ou un processeur comportant des instructions de code d'un programme d'ordinateur pour l'exécution de chacune des étapes du procédé selon l'une quelconque des revendications 1 à 8.

11. Gestionnaire de virtualisation (VIM) d'une infrastructure réseau (R), ledit gestionnaire étant configuré pour dimensionner une puissance électrique réservée par au moins une station de base courante (RANC) parmi une pluralité de stations de base (RAN1, RAN2) connectées au gestionnaire de virtualisation (VIM), le gestionnaire de virtualisation comprenant :
- un module de gestion de fonctions virtuelles (NFVI-VNFM) configuré pour recevoir une requête de dimensionnement de la puissance électrique réservée, , la requête de dimensionnement étant un échelonnement de la puissance électrique réservée pour ladite au moins une stations de base vers le haut, pour dimensionner cette puissance électrique réservée de sorte que sa valeur soit augmentée pour devenir supérieure à une valeur prédéterminée ou un échelonnement de la puissance électrique réservée par ladite au moins une stations de base vers le bas, pour dimensionner cette puissance électrique réservée de sorte que sa valeur soit diminuée pour devenir inférieure à une valeur prédéterminé ;
- un module de contrôle environnemental (NFVI-TEC) configuré pour paramétrer, en fonction de l'échelonnement contenu dans de ladite requête de dimensionnement, au moins un serveur informatique (S11, S12, S21, S22) de l'au moins une station de base courante le paramétrage comprenant l'extinction et/ou l'activation dudit au moins un serveur informatique (S11, S12, S21, S22) ; et
- un module hyperviseur (NFVI-HC) configuré pour contrôler au moins une ressource informatique virtuelle de l'infrastructure réseau, ladite ressource informatique virtuelle consommant une fraction de la puissance électrique réservée, de sorte à dimensionner la puissance électrique réservée, sur ledit au moins un serveur informatique (S11, S12, S21, S22).

12. Système (SS) comprenant un gestionnaire de virtualisation (VIM) selon la revendication 11 et une pluralité de stations de base (RAN1, RAN2) configurées pour être connectées audit gestionnaire de virtualisation.

## Patentansprüche

1. Verfahren zur Dimensionierung einer elektrischen Leistung, die von mindestens einer aktuellen Basisstation (RANC) unter einer Mehrzahl von Basisstationen (RAN1, RAN2) reserviert wird, die an einen Virtualisierungsmanager (VIM) einer Netzwerkinfrastruktur (R) angeschlossen sind, wobei das Verfahren von dem Virtualisierungsmanager ausgeführt wird, wobei das Verfahren die folgenden Schritte umfasst:
- Empfangen (S1) einer Anforderung zur Dimensionierung der reservierten elektrischen Leistung, wobei die Anforderung zur Dimensionierung eine Staffelung der für die mindestens eine Basisstation reservierten elektrischen Leistung nach oben ist, um diese reservierte elektrische Leistung so zu dimensionieren, dass ihr Wert erhöht wird, um größer als ein vorbestimmter Wert zu werden, oder eine Staffelung der von der mindestens einen Basisstation reservierten elektrischen Leistung nach unten, um diese reservierte elektrische Leistung so zu dimensionieren, dass ihr Wert verringert wird, um kleiner als ein vorbestimmter Wert zu werden;
- Parametrieren (S2), in Abhängigkeit von der in der Anforderung zur Dimensionierung enthaltenen Staffelung, mindestens eines Computerservers (S11, S12, S21, S22) der mindestens einen aktuellen Basisstation, wobei die Parametrierung das Ausschalten und/oder das Aktivieren des mindestens einen Computerservers (S11, S12, S21, S22) umfasst; und
- Steuern (S4), in Abhängigkeit von der Parametrierung des mindestens einen Computerservers, mindestens einer virtuellen Computerressource der Netzwerkinfrastruktur, wobei die virtuelle Computerressource einen Anteil der reservierten elektrischen Leistung verbraucht, so dass die reservierte elektrische Leistung auf dem mindestens einen Computerserver (S11, S12, S21, S22) dimensioniert wird.

2. Verfahren nach Anspruch 1, wobei die Parametrierung des mindestens einen Computerservers ein Ausschalten des Computerservers umfasst und die Steuerung der mindestens einen virtuellen Computerressource eine Freigabe (S3a), durch ein Steuerungsmodul (NFVI-CC), das der Virtualisierungsserver umfasst, der mindestens einen virtuellen Computerressource umfasst, so dass die reservierte elektrische Leitung verringert wird.

3. Verfahren nach Anspruch 2, wobei die Anforderung zur Dimensionierung eine Aufforderung zur Verringerung der reservierten elektrischen Leistung umfasst, wobei die Aufforderung zur Verringerung von einer Vorrichtung zur Steuerung elektrischer Leistung (CTRL) an ein Umgebungssteuerungsmodul (NFVI-TEC), das der Virtualisierungsmanager umfasst, gesendet wird, wobei die Vorrichtung zur Steuerung elektrischer Leistung an die mindestens eine aktuelle Basisstation angeschlossen ist.

4. Verfahren nach Anspruch 2 oder 3, wobei die Freigabe der mindestens einen virtuellen Computerressource, beim Ausschalten des Computerservers, ein Entfernen mindestens einer virtuellen Funktion (VNF1, VNF2, VNF3) in der Netzwerkinfrastruktur umfasst, wobei das Entfernen von einem Modul zur Verwaltung virtueller Funktionen (NFVI-VNFM) ausgeführt wird, das der Virtualisierungsmanager umfasst.

5. Verfahren nach Anspruch 1, wobei die Parametrierung des mindestens einen Computerservers eine Aktivierung des Computerservers umfasst und die Steuerung der mindestens einen virtuellen Computerressource eine Zuweisung (S3b), durch ein Steuerungsmodul (NFVI-CC), das der Virtualisierungsserver umfasst, der mindestens einen virtuellen Computerressource auf dem aktivierten Computerserver umfasst.

6. Verfahren nach Anspruch 5, wobei die Anforderung zur Dimensionierung eine Mitteilung einer Überschreitung der reservierten elektrischen Leistung umfasst, wobei die Überschreitungsmitteilung von einem Hypervisor-Modul (NFVI-HC) gesendet wird, das der Virtualisierungsmanager umfasst, oder eine Mitteilung eines Verkehrsanstiegs, die von einem Modul zur Verwaltung virtueller Funktionen (NFVI-VNFM) gesendet wird, das der Virtualisierungsmanager umfasst.

7. Verfahren nach Anspruch 5 oder 6, wobei die Zuweisung der mindestens einen virtuellen Computerressource, bei der Aktivierung des Computerservers, eine Instanziierung mindestens einer virtuellen Funktion (VNF1, VNF2, VNF3) in der Netzwerkinfrastruktur umfasst, wobei die Instanziierung von einem Modul zur Verwaltung virtueller Funktionen (NFVI-VNFM) ausgeführt wird, das der Virtualisierungsmanager umfasst.

8. Verfahren nach einem der vorhergehenden Ansprüche, wobei die mindestens eine virtuelle Computerressource eine virtuelle Computerressource mit elektrischer Leistung ist, die eine Komponente umfasst, die unter einer Rechenkomponente, einer Speicherkomponente, einer Arbeitsspeicherkomponente und einer Netzwerkkomponente gewählt ist.

9. Computerprogramm, das Anweisungen zur Implementierung des Verfahrens nach einem der Ansprüche 1 bis 8 umfasst, wenn die Anweisungen durch einen Prozessor einer Computerverarbeitungsschaltung ausgeführt werden.

10. Entnehmbares oder nicht entnehmbares Datenspeichermedium, das teilweise oder vollständig von einem Computer oder einem Prozessor gelesen werden kann und Computerprogrammcodeanweisungen zur Ausführung jedes der Schritte des Verfahrens nach einem beliebigen der Ansprüche 1 bis 8 umfasst.

11. Virtualisierungsmanager (VIM) einer Netzwerkinfrastruktur (R), wobei der Manager zum Dimensionieren einer elektrischen Leistung ausgestaltet ist, die von mindestens einer aktuellen Basisstation (RANC) unter einer Mehrzahl von Basisstationen (RAN1, RAN2) reserviert wird, die an den Virtualisierungsmanager (VIM) angeschlossen sind, wobei der Virtualisierungsmanager umfasst:
- ein Modul zur Verwaltung von virtuellen Funktionen (NFVI-VNFM), das dazu ausgestaltet ist, eine Anforderung zur Dimensionierung der reservierten elektrischen Leistung zu empfangen, wobei die Anforderung zur Dimensionierung eine Staffelung der für die mindestens eine Basisstation reservierten Leistung nach oben ist, um diese reservierte elektrische Leistung so zu dimensionieren, dass ihr Wert erhöht wird, um größer als ein vorbestimmter Wert zu werden, oder eine Staffelung der von der mindestens einen Basisstation reservierten elektrischen Leistung nach unten, um diese reservierte elektrische Leistung so zu dimensionieren, dass ihr Wert verringert wird, um kleiner als ein vorbestimmter Wert zu werden;
- ein Umgebungssteuerungsmodul (NFVI-TEC), das dazu ausgestaltet ist, in Abhängigkeit von der in der Anforderung zur Dimensionierung enthaltenen Staffelung, mindestens einen Computerserver (S11, S12, S21, S22) der mindestens einen aktuellen Basisstation zu parametrieren, wobei die Parametrierung das Ausschalten und/oder das Aktivieren des mindestens einen Computerservers (S11, S12, S21, S22) umfasst; und
- ein Hypervisor-Modul (NFVI-HC), das dazu ausgestaltet ist, mindestens eine virtuelle Computerressource der Netzwerkinfrastruktur zu steuern, wobei die virtuelle Computerressource einen Anteil der reservierten elektrischen Leistung verbraucht, so dass die reservierte elektrische Leistung auf dem mindestens einen Computerserver (S11, S12, S21, S22) dimensioniert wird.

12. System (SS), umfassend einen Virtualisierungsmanager (VIM) nach Anspruch 11 und eine Mehrzahl von Basisstationen (RAN1, RAN2), die dazu ausgestaltet sind, an den Virtualisierungsmanager angeschlossen zu werden.

## Claims

1. Method for sizing an electric power reserved by at least one current base station (RANC) from among a plurality of base stations (RAN1, RAN2) which are connected to a virtualization manager (VIM) of a network infrastructure (R), said method being implemented by said virtualization manager, the method comprising the following steps:
- receiving (S1) a request to size the reserved electric power, the sizing request being an upscaling of the electric power reserved for said at least one base station, in order to size this reserved electric power so that its value is increased in order to become greater than a predetermined value or a downscaling of the electric power reserved by said at least one base station, in order to size this reserved electric power so that its value is reduced in order to become less than a predetermined value;
- parameterizing (S2), depending on the scaling contained in said sizing request, at least one computer server (S11, S12, S21, S22) of the at least one current base station, the parameterization comprising shutting down and/or activating said at least one computer server (S11, S12, S21, S22); and
- controlling (S4), depending on the parameterization of said at least one computer server, at least one virtual computer resource of the network infrastructure, said virtual computer resource consuming a fraction of the reserved electric power, so as to size the reserved electric power, on said at least one computer server (S11, S12, S21, S22).

2. Method according to Claim 1, wherein parameterizing said at least one computer server comprises shutting down the computer server, and controlling said at least one virtual computer resource comprises a control module (NFVI-CC) which the virtualization manager comprises releasing (S3a) the at least one virtual computer resource so as to reduce the reserved electric power.

3. Method according to Claim 2, wherein the sizing request comprises a request to reduce the reserved electric power, said reduction request being transmitted by an electric power control device (CTRL) to an environmental control module (NFVI-TEC) which the virtualization manager comprises, said electric power control device being connected to the at least one current base station.

4. Method according to Claim 2 or 3, wherein releasing the at least one virtual computer resource comprises, upon shutting down the computer server, deleting at least one virtual function (VNF1, VNF2, VNF3) in the network infrastructure, said deletion being implemented by a virtual function management module (NFVI-VNFM) which the virtualization manager comprises.

5. Method according to Claim 1, wherein parameterizing said at least one computer server comprises activating the computer server, and controlling said at least one virtual computer resource comprises a control module (NFVI-CC) which the virtualization manager comprises allocating (S3b) the at least one virtual computer resource on the activated computer server.

6. Method according to Claim 5, wherein the sizing request comprises a notification of a surpassing of the reserved electric power, said surpassing notification being transmitted by a hypervisor module (NFVI-HC) which the virtualization manager comprises, or a notification of an increase in traffic transmitted by a virtual function management module (NFVI-VNFM) which the virtualization manager comprises.

7. Method according to Claim 5 or 6, wherein allocating the at least one virtual computer resource comprises, upon activating the computer server, instantiating at least one virtual function (VNF1, VNF2, VNF3) in the network infrastructure, said instantiation being implemented by a virtual function management module (NFVI-VNFM) which the virtualization manager comprises.

8. Method according to one of the preceding claims, wherein the at least one virtual computer resource is an electric power virtual computer resource comprising a component chosen from among a computing component, a storage component, a memory component and a network component.

9. Computer program comprising instructions for implementing the method according to one of Claims 1 to 8, when said instructions are executed by a processor of a computer processing circuit.

10. Removable or irremovable data storage medium which can be read in part or in full by a computer or a processor, comprising code instructions of a computer program for executing each of the steps of the method according to any one of Claims 1 to 8.

11. Virtualization manager (VIM) of a network infrastructure (R), said manager being configured to size an electric power reserved by at least one current base station (RANC) from among a plurality of base stations (RAN1, RAN2) which are connected to the virtualization manager (VIM), the virtualization manager comprising:
- a virtual function management module (NFVI-VNFM) configured to receive a request to size the reserved electric power, the sizing request being an upscaling of the electric power reserved for said at least one base station, in order to size this reserved electric power so that its value is increased in order to become greater than a predetermined value or a downscaling of the electric power reserved by said at least one base station, in order to size this reserved electric power so that its value is reduced in order to become less than a predetermined value;
- an environmental control module (NFVI-TEC) configured to parameterize, depending on the scaling contained in said sizing request, at least one computer server (S11, S12, S21, S22) of the at least one current base station, the parameterization comprising shutting down and/or activating said at least one computer server (S11, S12, S21, S22); and
- a hypervisor module (NFVI-HC) configured to control at least one virtual computer resource of the network infrastructure, said virtual computer resource consuming a fraction of the reserved electric power, so as to size the reserved electric power, on said at least one computer server (S11, S12, S21, S22).

12. System (SS) comprising a virtualization manager (VIM) according to Claim 11 and a plurality of base stations (RAN1, RAN2) which are configured to be connected to said virtualization manager.
